**Europäisches Patentamt**

**European Patent Office**

**Office européen des brevets**

(11) Veröffentlichungsnummer: **0 075 241**
**B1**

(12) **EUROPÄISCHE PATENTSCHRIFT**

(45) Veröffentlichungstag der Patentschrift :
07.05.86

(21) Anmeldenummer : 82108427.4

(22) Anmeldetag : 13.09.82

(51) Int. Cl.⁴ : **C 23 G 1/36**, **B 01 D 17/04**,
**C 02 F 1/00**

(54) Verfahren zur Regenerierung wässriger Entfettungs- und Reinigungslösungen.

(30) Priorität : 19.09.81 DE 3137341

(43) Veröffentlichungstag der Anmeldung :
30.03.83 Patentblatt 83/13

(45) Bekanntmachung des Hinweises auf die Patenterteilung : 07.05.86 Patentblatt 86/19

(84) Benannte Vertragsstaaten :
AT DE

(56) Entgegenhaltungen :
DE-A- 1 517 723
DE-A- 2 042 310
CHEMICAL ABSTRACTS, Band 83, Nr. 4, 28. Juli 1975,
Seite 294, Nr. 32762e, Columbus, Ohio, USA
METAL FINISHING ABSTRACTS, Band 18, Nr. 3,
Mai/Juni 1976, Seite 101, Zusammenfassung H,
"Recovering alkaline cleaners"

(73) Patentinhaber : **Henkel Kommanditgesellschaft auf
Aktien**
**Postfach 1100 Henkelstrasse 67**
**D-4000 Düsseldorf-Holthausen (DE)**

(72) Erfinder : **Bürger, Helga**
**Dorfstrasse 10**
**D-4006 Erkrath 2 (DE)**
Erfinder : **Rossmann, Christian**
**Koplpingstrasse 3**
**D-4018 Langenfeld (DE)**

**Beschreibung**

Gegenstand der Erfindung ist ein Verfahren zur Regenerierung alkalischer oder neutraler, silikat- und phosphatfreier Reinigungsmittellösungen, die mit emulgierten mineralischen oder nativen Ölen verunreinigt sind.

Für die Entfettung und Reinigung im industriellen Bereich, insbesondere von metallischen Oberflächen, werden wäßrige Lösungen verwendet, die Tenside und evtl. sogenannte Buildersubstanzen, wie Alkalihydroxide, Alkalicarbonate, Komplexbildner und organische oder anorganische Korrosionsschutzmittel enthalten. Vielfach enthalten sie darüber hinaus Silikate und/oder Phosphate. Jedoch werden insbesondere bei der elektrolytischen Reinigung oder bei der Spritzreinigung spanabhebend bearbeiteter Werkstücke auch Produkte ohne Silikate und Phosphate eingesetzt. In alkalischen Reinigungsmitteln, hauptsächlich elektrolytischen Entfettungsmitteln, kann auch auf einen besonderen Tensidgehalt verzichtet werden. Bei der Verwendung werden diese Reinigungsmittellösungen durch Mineralöl und/oder native Öle, denen Emulgatoren, Korrosionsschutzmittel und andere Öladditive zugesetzt sein können, verunreinigt. Durch die aufgenommenen Verunreinigungen, die durch den evtl. Emulgatorgehalt im Öl und die Tenside des Reinigungsmittels in der Lösung emulgiert werden, wird die wäßrige Lösung in ihrer Wirksamkeit beeinträchtigt und schließlich unwirksam ; die Lösungen müssen dann erneuert werden. Vor dem Ablassen der gebrauchten Lösungen müssen diese entsprechend den Vorschriften von Öl befreit und, wenn sie alkalisch sind, neutralisiert werden. Mit der Neutralisation ist im allgemeinen keine ausreichende Entölung verbunden. Es muß dann eine Emulsionsspaltung vor genommen werden. Diese kann nach verschiedenen Verfahren, z. B. durch Erniedrigung des pH-Wertes auf ca.1, Aussalzen der Lösung oder Zusatz von Flockungsmitteln, wie Aluminium- oder Eisensalzen im sauren Bereich, und erneuter Neutralisation erfolgen. Bei dem Ablassen der Reinigungslösungen und der Abwasseraufbereitung sind die Inhaltsstoffe der Reinigungslösung verloren. Deshalb erscheint es vorteilhaft, gebrauchte Reinigungslösungen zu regenerieren, um sie wieder zu verwenden.

Eine Regenerierung wäßriger Entfettungslösungen ist mit Hilfe der Ultrafiltration und Zentrifugalseparatoren möglich. Mit Zentrifugalseparatoren können jedoch nur Entfettungslösungen regeneriert werden, bei denen die Öle und Verunreinigungen nicht stabil emulgiert sind. Außerdem ist bei diesem Verfahren wie auch bei der Ultrafiltration ein erheblicher apparativer Aufwand erforderlich. Dies trifft auch deshalb zu, weil in vielen Fällen die Verunreinigungen nicht nur aus organischen Substanzen, sondern auch aus wasserunlöslichen Partikeln bestehen.

In der DE-A-20 42 310 wird ein Verfahren sowie ein Mittel zur Abtrennung von Öl aus wäßrigen ölhaltigen Gemischen, insbesondere Abwässern, beschrieben. Die Mittel bestehen aus einer wäßrigen Lösung von Eisen-(III)- und Calciumsalzen wobei das Gewichtsverhältnis zwischen Calcium und Eisen 1,5 : 1 bis 5 : 1 beträgt, und enthalten vorzugsweise eine anorganische Säure. Bei der Anwendung derartiger Mittel wird der pH-Wert des ölhaltigen Gemisches auf Werte zwischen 3 und 10,5 eingestellt, die Salzlösung zugegeben, so daß die Konzentration an Eisen und Calcium im Bereich von 10 bis 3 000 ppm liegt, und nach Abscheiden der Ölphase dieselbe abgetrennt. Die Ölphase enthält die zugesetzten Calcium- und Eisensalze sowie gegebenenfalls im ölhaltigen Gemisch enthaltene oberflächenaktive Substanzen. Ein Zusatz von Calciumsalzen alleine führt nicht zu einer Abscheidung des Öls.

Aus Chemical Abstracts, Vol. 83, Nr. 4 (1975), Seite 294, Abstract 32 762e, war es bekannt, verbrauchte alkalische Entfettungsbäder mit Kalkmilch (60 % CaO) zu behandeln, um so die ölhaltigen Emulsionen zu brechen und die in den Bädern enthaltenen Alkalimetallcarbonate, -silikate und -phosphate in unlösliche Salze zu überführen. Die von den Verunreinigungen befreiten Bäder können erneut Verwendung finden.

Gegenstand der vorliegenden Erfindung ist demgegenüber ein Verfahren zum Regenerieren wäßriger alkalischer oder neutraler Entfettungs- und Reinigungslösungen, die

a) silikat- und phosphatfrei sind,

b) vorzugsweise nichtionogene sowie gegebenenfalls daneben auch anionische Tenside enthalten, wobei die anionischen Tenside nur in untergeordneten Mengen gegenüber den nichtionogenen vorliegen, und

c) mit mineralischen und/oder nativen Ölen verunreinigt sind, unter Verwendung von Salzen des Calciums und/oder Magnesiums, welches dadurch gekennzeichnet ist, daß man den Reinigungslösungen unter Beibehaltung ihres pH-Wertes

d) zunächst 1 bis 5 g/l wasserlösliche Alkalimetallphosphate und/oder -silikate und danach

e) wasserlösliche Calcium- und/oder Magnesiumsalze in einer Konzentration von 0,3 bis 2 g/l Calciumionen bzw. 0,2 bis 1,2 g/l Magnesiumionen, jeweils bezogen auf die gesamte Reinigungslösung, zusetzt und

f) nach Absetzen des gebildeten Niederschlages sowie nach Abscheiden einer Ölschicht diese Verunreinigungen von der wäßrigen Phase der verbliebenen Reinigungslösung abtrennt.

Die so regenerierten Reinigungslösungen können erneut verwendet werden.

Die Reinigungs- und Entfettungslösungen, die nach dem erfindungsgemäßen Verfahren zu regenerieren sind, können pH-Werte zwischen 7 und 14 besitzen. Das erfindungsgemäße Verfahren ist gerichtet auf die Regenerierung phosphat- und silikatfreier Reinigungsmittel. Diese können Alkalien, wie Alkalihydroxide, Alkalicarbonate und Alkaliborate, sowie Komplexbildner, wie komplexierende Phosphonsäuren oder Phosphonocarbonsäuren, insbesondere 1-Hydroxyalkan-1,1-diphosphonsäure, 1-Aminoalkan-1,1-diphosphonsäure oder Aminotrimethylentriphosphonsäure beziehungsweise deren Alkalisalze enthalten. Ferner können sie anorganische und organische Korrosionsinhibitoren enthalten.

Weiterhin können zur Erzielung einer guten Reinigungswirkung die Lösungen nichtionische Tenside enthalten. Als nichtionische Tenside kommen insbesondere Anlagerungsprodukte von Ethylenoxid und gegebenenfalls Propylenoxid an Fettalkohole, Fettsäuren, Fettamine, insbesondere mit 12 bis 18 Kohlenstoffatomen im Alkylrest, sowie Alkylamine mit 6 bis 15 Kohlenstoffatomen in Betracht. Auch können Blockpolymerisate aus Ethylenoxid und Propylenoxid Anwendung finden. Vorzugsweise enthalten die zu regenerierenden Reinigungslösungen nichtionogene Tenside in Mengen von 0,1 bis 5 g/l. Die Gegenwart von anionischen Tensiden ist nicht zweckmäßig, da hierdurch das gute Absetzvermögen der sich bildenden Niederschläge und klares Abscheiden der Ölschicht beeinträchtigt wird. Sie sollten daher keine Verwendung finden, oder nur in untergeordneten Mengen gegenüber den nichtionogenen Tensiden vorliegen.

Den verunreinigten Reinigungslösungen werden Alkaliphosphate und/oder Alkalisilikate, vornehmlich in Form ihrer Natriumsalze, zugesetzt in einer Konzentration von 1 bis 5 g/l. Vorzugsweise liegt die Konzentration zwischen 2 und 4 g/l Alkaliphosphat oder Alkalisilikat. Diese Substanzen können in fester und vornehmlich in gelöster Form den verbrauchten Reinigungslösungen zudosiert werden. Dies kann zum Beispiel zu betriebswarmen Lösungen, aber auch zu Lösungen von Raumtemperatur erfolgen.

Im einzelnen kommen Alkaliorthophosphate, Alkalipolymerphosphate und vorzugsweise Alkalidiphosphate in Betracht. Unter Alkaliphosphate werden im Sinne der Erfindung jeweils die Natrium- und Kaliumsalze verstanden.

Als Alkalisilikate werden Produkte mit einem Molverhältnis von $SiO_2 : Na_2O$ beziehungsweise $K_2O$ von 1 : 1 bis 4 : 1, vorzugsweise 2 : 1 bis 3,5 : 1 verwendet.

Nach Auflösung der Silikate und/oder Phosphate werden den Reinigungslösungen die löslichen Calcium- und/oder Magnesiumsalze, bevorzugt in Form wäßriger Lösungen, zugegeben. Als lösliche Calciumsalze eignen sich insbesondere Calciumnitrat und Calciumchlorid ; als lösliche Magnesiumsalze, Magnesiumnitrat, Magnesiumsulfat und Magnesiumchlorid. Die Salze können einzeln oder im Gemisch verwendet werden. Die löslichen Salze werden den zu regenerierenden Reinigungslösungen in Konzentrationen von 0,3-2 g/l, berechnet als Calciumionen, beziehungsweise 0,2-1,2 g/l Magnesiumionen, zugesetzt. Vorzugsweise erfolgt die Zugabe in Konzentrationen zwischen 0,6-1,2 g/l Calciumionen bzw. 0,35-0,7 g/l Magnesiumionen.

Bei Zugabe von Alkalisilikaten allein — also ohne Alkaliphosphat — in die zu regenerierenden Reinigungslösungen können neben Calcium- und/oder Magnesiumsalzen auch zusätzlich Aluminium- und/oder Eisen-(III)-ionen in Form löslicher Salze zugesetzt werden.

Nach guter Durchmischung wird der sich bildende Niederschlag aus Calcium- und/oder Magnesiumphosphaten beziehungsweise -silikaten sich absetzen und die Öle sich abscheiden lassen. Zur Verbesserung der Sedimentation des entstandenen Niederschlages kann zusätzlich ein Flockungshilfsmittel auf Polyelektrolytbasis, vorzugsweise Polyacrylamide, zugegeben werden. Nach Abziehen der Ölschicht und Entfernung des Niederschlages kann die Reinigungslösung wiederverwendet werden.

Der durch die Regeneration verlorene Lösungsanteil wird durch Zugabe von Wasser und Nachschärfen mit Reinigungsmittel bis zur Sollkonzentration ausgeglichen. Die Reinigungslösung ist im allgemeinen wieder voll wirksam. Nur in Einzelfällen ist eine Ergänzung des Tensidgehältes erforderlich. Eine pH-Wert-Veränderung der Reinigungslösung, die zu einer Beeinträchtigung der Reinigungswirkung führen würde, findet bei der Regeneration nicht statt.

Das Regenerierverfahren kann für die gleiche Reinigungslösung mit erneuter Verunreinigung wiederholt durchgeführt werden.

## Beispiele

Der Anmeldungsgegenstand wird durch die nachfolgenden Beispiele erläutert ohne hierauf beschränkt zu sein. Bei den Angaben in % handelt es sich, sofern nichts Anderes angegeben wird, stets um Gewichts-%.

1. Eine 1,5 %ige Lösung eines sogenannten Neutralreinigers auf Basis von :

35 % Alkanolaminstearat
2 % 1-Hydroxyethan-1,1-disphosphonsäure
5 % Mercaptobenztriazol
3 % Blockpolymerisat aus Ethylendiamin und 30 Mol Ethylenoxid sowie 60 Mol Propylenoxid
1 % Anlagerungsprodukt von 10 Mol Ethylenoxid an $C_{12}$ bis $C_{16}$ Fettamin
Rest Wasser

enthielt 20 g/l eines Bohröls auf Basis von Mineralöl, Petroleumsulfonat, Seife und nichtionischer Tenside

3

in stabiler Emulsion. Die Emulsion war weder durch einen Zentrifugalseparator trennbar noch durch Zusatz von 10 g/l Aluminiumsulfat spaltbar. Der Emulsion wurden 2 g/l Natriumdiphosphat und anschließend 12,5 ml/l einer 20 %igen Calciumnitratlösung, entsprechend 0,6 g/l Calciumionen, zugegeben. Die Emulsion spaltete, und in der wäßrigen Entfettungslösung verblieben nur noch ca. 350 mg/l Bohröl. Nach dieser Regenierung konnte die Reinigungslösung ohne Einbuße der Wirksamkeit für einen weiteren Reinigungszyklus eingesetzt werden.

Das gleiche Ergebnis wurde erzielt, wenn der verbrauchten Reinigungslösung 2 g/l Natriummetasilikat und anschließend 10 ml/l einer 20 %igen Calciumchloridlösung, entsprechend 0,7 g/l Calciumionen, unter Rühren zugesetzt wurden. Der Mineralölgehalt der wäßrigen Phase sank unter 20 mg/l.

2. Ein elektrolytisches Entfettungsbad, bestehend aus

45 g/l Natriumhydroxid
5 g/l Natriumgluconat

ist mit 10 g/l Mineralölemulsion verunreinigt. Zur Spaltung der Emulsion versetzt man diese mit 2 g/l Natriumdiphosphat. Nach vollkommener Auflösung des Phosphats wird eine Calciumchloridlösung unter Rühren zugesetzt. Für 1 l Entfettungsbad sind 8,5 ml einer 20 %igen Calciumchlorid-Lösung erforderlich. Zur Verbesserung der Sedimentierung des ausfallenden Phosphatniederschlages werden als Flockungshilfsmittel 0,5 ppm eines Polyacrylamids zugegeben. Nach Abtrennung der Ölphase enthält die wäßrige Lösung nur noch 200 mg/l Öl. Der Gluconatgehalt bleibt vollkommen erhalten. Das Entfettungsbad kann bestimmungsgemäß wiederverwendet werden.

3. Eine 2 %ige Lösung eines sogenannten Neutralreinigers, bestehend aus :

25 % Diethanolamin
10 % C$_8$ bis C$_{12}$ Fettsäure
5 % Alkylaminethoxylat Anlagerungsprodukt aus C$_{12}$-C$_{16}$ Fettamin mit 10 Mol Ethylenoxid
5 % Blockpolymerisat aus Ethylendiamin und 30 Mol Ethylenoxid sowie 60 Mol Propylenoxid
Rest Wasser

wird mit 10 g/l einer Mineralölemulsion verunreinigt. Zur Wiederherstellung der vollen Wirksamkeit werden in der Lösung 2 g/l Natriumdiphosphat aufgelöst und das Phosphat durch Zusatz von 20 ml/l einer Calcium/Magnesiumnitratlösung, welche 15 g/l Calcium- und 9 g/l Magnesiumionen enthält, gefällt. Nach Abziehen der Ölphase und Abfiltrieren des Niederschlages wird das Antischaummittel ergänzt. Die Lösung besitzt dann wieder ihre ursprüngliche Reinigungswirkung und Spritzbarkeit ohne Schaumbildung. Der Mineralölgehalt liegt unter 100 mg/l. Der Regenerierprozeß kann mehrfach wiederholt werden und wird nur durch das Aufsalzen der Lösung begrenzt.

## Patentansprüche

1. Verfahren zum Regenerieren wäßriger alkalischer oder neutraler Entfettungs- und Reinigungslösungen, die
a) silikat- und phosphatfrei sind,
b) vorzugsweise nichtionogene sowie gegebenenfalls daneben auch anionische Tenside enthalten, wobei die anionischen Tenside nur in untergeordneten Mengen gegenüber den nichtionogenen vorliegen, und
c) mit mineralischen und/oder nativen Ölen verunreinigt sind, unter Verwendung von Salzen des Calciums und/oder Magnesiums, dadurch gekennzeichnet, daß man den Reinigungslösungen unter Beibehaltung ihres pH-Wertes
d) zunächst 1 bis 5 g/l wasserlösliche Alkalimetallphosphate und/oder -silikate und danach
e) wasserlösliche Calcium- und/oder Magnesiumsalze in einer Konzentration von 0,3 bis 2 g/l Calciumionen bzw. 0,2 bis 1,2 g/l Magnesiumionen, jeweils bezogen auf die gesamte Reinigungslösung, zusetzt und
f) nach Absetzen des gebildeten Niederschlages sowie nach Abscheiden einer Ölschicht diese Verunreinigungen von der wäßrigen Phase der verbliebenen Reinigungslösung abtrennt.

2. Verfahren nach Anspruch 1, dadurch gekennzeichnet, daß man den Reinigungslösungen in Stufe d 2 bis 4 g/l wasserlösliche Alkalimetallphosphate und/oder -silikate, bezogen auf die gesamte Reinigungslösung, zusetzt.

3. Verfahren nach Anspruch 1 und 2, dadurch gekennzeichnet, daß man den Reinigungslösungen in Stufe e wasserlösliche Calcium- und/oder Magnesiumsalze in einer Konzentration von 0,6 bis 1,2 g/l Calciumionen bzw. 0,35 bis 0,7 g/l Magnesiumionen, bezogen auf die gesamte Reinigungslösung, zusetzt.

4. Verfahren nach Anspruch 1 bis 3, dadurch gekennzeichnet, daß man in Stufe d als Alkalimetallphosphat ein Alkalimetalldiphosphat verwendet.

5. Verfahren nach Anspruch 1 bis 3, dadurch gekennzeichnet, daß man in Stufe e als Calciumsalze Nitrate und/oder Chloride bzw. als Magnesiumsalze Nitrate, Sulfate und/oder Chloride verwendet.

6. Verfahren nach Anspruch 1 bis 3, dadurch gekennzeichnet, daß man bei alleiniger Verwendung von Alkalimetallsilikaten in Stufe d den Reinigungslösungen in Stufe e zusätzlich Aluminium- und/oder Eisen-(III)-ionen in Form wasserlöslicher Salze zusetzt.

7. Verfahren nach Anspruch 1 bis 6, dadurch gekennzeichnet, daß man den Reinigungslösungen in Stufe e zusätzlich Flockungshilfsmittel auf Basis von Polyelektrolyten zusetzt.


## Claims

1. A process for regenerating aqueous alkaline or neutral degreasing and cleaning solutions which
   a) are silicate- and phosphate-free,
   b) contain preferably nonionic and, optionally, also anionic surfactants, the anionic surfactants being present in only small amounts in relation to the nonionic surfactants, and
   c) are contaminated by mineral and/or native oils, using salts of calcium and/or magnesium, characterized in that
   d) first from 1 to 5 g/l of water-soluble alkali metal phosphates and/or silicates and then
   e) water-soluble calcium and/or magnesium salts in a concentration of from 0.3 to 2 g/l calcium ions and from 0.2 to 1.2 g/l magnesium ions, based in each case of the cleaning solution as a whole, are added to the cleaning solutions without any change in their pH-value and
   f) after the deposit formed has settled and after separation of an oil layer, these impurities are separated off from the aqueous phase of the residual cleaning solution.

2. A process as claimed in Claim 1, characterized in that from 2 to 4 g/l water-soluble alkali metal phosphates and/or silicates, based on the cleaning solution as a whole, is added to the cleaning solutions in step d).

3. A process as claimed in Claims 1 and 2, characterized in that water-soluble calcium and/or magnesium salts are added to the cleaning solutions in step e) in a concentration of from 0.6 to 1.2 g/l calcium ions and from 0.35 to 0.7 g/l magnesium ions, based on the cleaning solution as a whole.

4. A process as claimed in Claims 1 to 3, characterized in that an alkali metal diphosphate is used as the alkali metal phosphate in step d).

5. A process as claimed in Claims 1 to 3, characterized in that nitrates and/or chlorides are used as the calcium salts and nitrates, sulfates and/or chlorides as the magnesium salts in step e).

6. A process as claimed in Claims 1 to 3, characterized in that, where alkali metal silicates are used on their own in step d), aluminium and/or iron-(III) ions in the form of water-soluble salts are additionally added to the cleaning solutions in step e).

7. A process as claimed in Claims 1 to 6, characterized in that flocculating aids based on polyelectrolytes are additionally added to the cleaning solutions in step e).


## Revendications

1. Procédé pour régénérer des solutions aqueuses de dégraissage et de purification alcalines ou neutres, lesquelles
   a) sont exemptes de silicate et de phosphate,
   b) contiennent des tensioactifs de préférence non ionogènes de même qu'éventuellement à côté aussi des anioniques, les tensioactifs anioniques ne se présentant qu'en des quantités insignifiantes par rapport aux non-ionogènes et
   c) sont contaminées avec des huiles minérales et/ou naturelles, avec utilisation de sels de calcium et/ou du magnésium, caractérisé en ce qu'on ajoute aux solutions de purification, tout en maintenant leur valeur de pH,
   d) d'abord 1 à 5 g/litre de phosphates et/ou de silicates de métal alcalin solubles dans l'eau et par la suite
   e) des sels solubles dans l'eau de calcium et/ou de magnésium à une concentration de 0,3 à 2 g/litre d'ions calcium ou de 0,2 à 1,2 g/litre d'ions magnésium, chaque fois par rapport à la solution de purification totale, et
   f) en ce qu'après dépôt du précipité formé, de même qu'après séparation d'une couche d'huile, on sépare ces impuretés à partir de la phase aqueuse de la solution de purification restante.

2. Procédé selon la revendication 1, caractérisé en ce qu'on ajoute aux solutions de purification au stade d 2 à 4 g/litre de phosphates et/ou silicates de métal alcalin solubles dans l'eau par rapport à la solution de purification totale.

3. Procédé selon les revendications 1 et 2, caractérisé en ce qu'on ajoute aux solutions de purification au stade e des sels solubles dans l'eau de calcium et/ou de magnésium à une concentration de 0,6 à 1,2 g/litre d'ions calcium ou de 0,35 à 0,7 g/litre d'ions magnésium, par rapport à la solution de purification totale.

4. Procédé selon les revendications 1 à 3, caractérisé en ce qu'on utilise au stade d en tant que phosphate de métal alcalin du diphosphate de métal alcalin.

5. Procédé selon les revendications 1 à 3, caractérisé en ce qu'au stade e on utilise comme sels de calcium des nitrates et/ou chlorures, ou comme sels de magnésium des nitrates, sulfates et/ou chlorures.

6. Procédé selon les revendications 1 à 3, caractérisé en ce que dans le cas de l'emploi unique de silicates de métal alcalin au stade d, on ajoute aux solutions de purification au stade e supplémentairement des ions aluminium et/ou fer-(III) sous forme de sels solubles dans l'eau.

7. Procédé selon les revendications 1 à 6, caractérisé en ce qu'on ajoute aux solutions de purification au stade e en plus des auxiliaires de floculation à base de polyélectrolytes.